# FASCICULE DE BREVET EUROPEEN

(11) **EP 3 353 510 B1**
(45) Date de publication et mention de la délivrance du brevet: **25.03.2020**
(21) Numéro de dépôt: 16781516.6
(22) Date de dépôt: 20.09.2016
(51) Int. Cl.: G01G 19/56

(54) **PROCÉDÉ DE COMMANDE D'UN DISPOSITIF DE PESAGE**
REGELUNGSVERFAHREN FÜR EINE WAAGE
METHOD FOR CONTROLLING A WEIGHING DEVICE

(30) Priorité: 22.09.2015 FR 1558922
(43) Date de publication de la demande: 01.08.2018
(73) Titulaire: SEB S.A., 69130 Ecully (FR)
(72) Inventeur: CAREGNATO, Stéphane, Daniel, Paul, 74150 Bloye (FR); DRODE, Sébastien, 69007 Lyon (FR); SUCHET, Stéphane, 74150 Marcellaz Albanais (FR); MASSON, Philippe, 74540 Hery sur Alby (FR)
(74) Mandataire: Soares, Luis Filipe
(86) Numéro de dépôt international: PCT/FR2016/052383
(87) Numéro de publication internationale: WO 2017/051112

(56) Documents cités:
- EP-A1- 2 700 915
- DE-U1-202013 101 483
- FR-A1- 2 804 519
- US-B1- 8 829 365

## Description

La présente invention concerne un procédé de commande d'un dispositif de pesage par un terminal, en particulier pour le guidage d'un utilisateur réalisant une recette de cuisine selon les revendications indépendantes 1 et 7.

Il est connu par exemple des documents DE 20 2013 101 483 U1 et US 8829365 B1 d'assister un utilisateur dans l'élaboration d'une recette de cuisine en lui communiquant des instructions s'affichant sur un terminal. L'utilisateur doit alors exécuter chaque étape puis valider les étapes réalisées. Le terminal peut être distant du dispositif de pesage et être agencé pour communiquer avec le dispositif de pesage selon un protocole de communication sans fil.

Cette disposition est intéressante dans le sens où une information provenant du dispositif de pesage peut avertir le terminal de l'exécution d'une étape, par exemple lors d'une pesée lorsque le poids cible est atteint.

Il apparait ainsi que le terminal agit comme une commande à distance du dispositif de pesage et permet de gérer à distance ses fonctions comme l'unité à utiliser pour le pesage ou un affichage lumineux signalant à l'utilisateur que le dispositif de pesage est apte à réaliser la mesure de poids correspondant à une étape de la recette.

Cette communication entre le dispositif de pesage et le terminal est satisfaisante en ce que l'utilisateur est correctement guidé pour l'exécution de la recette de manière à n'oublier aucune étape et en s'assurant que chaque étape est correctement exécutée avant de commencer la suivante.

Cependant la réalisation d'une recette de cuisine ne se limite pas à une série de pesées successives : d'autres types d'étapes doivent être réalisés comme le mélange d'ingrédients ou des périodes d'attente, par exemple pour laisser reposer une pâte.

Lors de telles étapes, le dispositif de pesage est allumé et toutes ses fonctions sont disponibles. Il vérifie ainsi constamment l'état de ses capteurs de poids et de ses commandes, même lorsque ceux-ci ne sont pas censés être sollicités. Le temps d'exécution d'une recette étant assez variable de quelques minutes à plus d'une heure (en moyenne une vingtaine de minutes), il apparait que le dispositif de pesage est en fonctionnement plusieurs minutes par recette sans que cela soit nécessaire.

De plus, lorsque le dispositif de pesage fonctionne sur piles ou batteries, la sauvegarde de l'énergie est un aspect primordial.

La présente invention vise à résoudre tout ou partie des inconvénients mentionnés ci-dessus.

A cet effet, la présente invention concerne un procédé de commande d'un dispositif de pesage par un terminal, le dispositif de pesage comprenant une source d'énergie interne, une entité de commande agencée pour recevoir des informations de commande selon un protocole de communication et au moins un élément fonctionnel apte à être commandé par l'entité de commande, le procédé de commande comprenant les étapes suivantes :
- élaboration par le terminal et/ou acquisition d'une information de commande comprenant au moins une instruction de rafraichissement ou d'actualisation relative à une période cyclique et/ou un rapport cyclique de rafraichissement ou d'actualisation d'une fonction de l'au moins un élément fonctionnel du dispositif de pesage,
- envoi à l'entité de commande de ladite information de commande selon le protocole de communication.

La période cyclique de rafraichissement ou d'actualisation de l'élément fonctionnel correspond à la fréquence de sollicitation dudit élément fonctionnel par l'entité de commande.

Le procédé de commande du dispositif de pesage permet ainsi, par l'envoi d'informations de commande d'adapter la sollicitation d'un élément fonctionnel selon les besoin d'utilisation du dispositif de pesage.

Par exemple, une information de commande peut être envoyée lors de l'exécution d'une étape d'une recette de cuisine consistant à laisser reposer une pâte obtenue lors d'une étape précédente.

Cette information de commande comprendra par exemple une instruction relative à l'allongement de la période cyclique de rafraichissement de l'affichage et une autre instruction relative à l'allongement de la période cyclique d'actualisation de mesure de poids. Autrement dit, il s'agit de réaliser une inhibition de la fonction de mesure du poids.

Il apparait ainsi que ce procédé de commande du dispositif de pesage permet moduler la consommation énergétique du dispositif de pesage tout en conservant à disposition de l'utilisateur les fonctions qu'il est susceptible d'utiliser selon le contexte.

Par une adaptation contextuelle de la sollicitation des éléments fonctionnels, le procédé permet une réduction de la consommation énergétique du dispositif de pesage commandé sans incidence sur l'utilisation.

Le même effet peut être obtenu en faisant varier le rapport cyclique de rafraichissement ou d'actualisation. Le rapport cyclique peut être varié indépendamment de la période cyclique ou alors en combinaison avec la variation de la période cyclique que ce soit pour une instruction de rafraichissement ou d'actualisation.

Selon un aspect de l'invention, l'information de commande comprend une requête de charge relative à la charge de la source d'énergie interne. Il est ainsi possible d'interroger le dispositif de pesage sur sa quantité d'énergie en réserve.

Selon un aspect de l'invention, l'acquisition correspond à une réception d'une information en provenance d'un serveur distant, de préférence apte à communiquer selon le protocole de communication ou selon un autre protocole avec le terminal.

Selon un aspect de l'invention, l'instruction de rafraichissement ou d'actualisation correspond respectivement à :
- la période cyclique et/ou au rapport cyclique de rafraichissement d'un dispositif d'émission d'information tel que l'affichage d'un afficheur ou une émission sonore d'une alarme, ou,
- la période cyclique et/ou au rapport cyclique d'actualisation d'acquisition d'un capteur, tel qu'un capteur de poids, ou d'une interface utilisateur, telle qu'un bouton de commande.

Il apparait ainsi qu'en définissant un période cyclique et/ou le rapport cyclique à appliquer par l'envoi d'une information de commande, il est possible de ralentir la fréquence de fonctionnement de certains éléments fonctionnels du dispositif de pesage.

Ainsi il est possible d'économiser l'énergie de la source d'énergie interne par exemple en réduisant au minimum la fréquence de contrôle du poids au niveau de capteur de poids ou en ne rafraichissant pas l'affichage.

Cette disposition est particulièrement intéressante lorsque l'utilisateur du dispositif de pesage n'utilise pas certains éléments fonctionnels dans un contexte donné.

Selon un aspect de l'invention, ladite information de commande comprend en outre une instruction de consigne relative à l'exécution d'une tâche par un élément fonctionnel.

Non seulement l'information de commande permet, à partir du terminal, de gérer la consommation énergétique du dispositif de pesage en sollicitant plus ou moins les éléments fonctionnels, mais également cette information de commande permet de commander à distance la réalisation d'une tâche par la balance.

Selon un aspect de l'invention, une tâche peut correspondre à un poids en gramme à peser, un volume liquide à déterminer ou un texte à afficher à destination de l'utilisateur du dispositif de pesage.

Selon un aspect de l'invention, le procédé de commande d'un dispositif de pesage par un terminal comprend en outre une étape de réception d'une information de contrôle en provenance du dispositif de pesage, l'information de contrôle comprenant :
- une indication de charge relative à l'état de charge de la source d'énergie interne et/ou
- une indication de retour relative à un état d'un élément fonctionnel, telle qu'une valeur acquise par un capteur ou une commande utilisateur obtenue par une interface utilisateur, et/ou ladite indication de retour (re) étant relative à un mode de fonctionnement d'un ensemble d'éléments fonctionnels, un mode de fonctionnement correspondant à une définition donnée des états des éléments fonctionnels dudit ensemble.

Un mode de fonctionnement correspond ainsi à une configuration d'états reflétant un fonctionnement général du dispositif de pesage DP. Cette configuration peut être préétablie.

Selon un exemple, un mode de fonctionnement peut être qualifié de « mode de fonctionnement à pleine puissance ». Dans ce cas, la définition des états des éléments fonctionnels F est telle que chaque élément fonctionnel est sollicité au maximum de ses possibilités. La consommation énergétique n'est pas une priorité pour ce mode de fonctionnement.

Selon un autre exemple, un mode de fonctionnement peut être qualifié de « mode de fonctionnement en économie de batterie ». Dans ce cas, les éléments fonctionnels sont moins sollicités et la consommation énergétique réduite.

D'autres modes de fonctionnement peuvent également être prévus, par exemple pour privilégier le fonctionnement de certains éléments fonctionnels par rapport à d'autres, par exemple moins susceptibles d'être utilisés dans un contexte donné.

Il apparait que le terminal est également apte à recevoir des informations de contrôle en provenance du dispositif de pesage et renseignant sur l'état réel du dispositif de pesage.

Il est ainsi possible pour le terminal de déterminer si une instruction de consigne a bien été suivie et le cas échéant de réceptionner un résultat attendu par exemple si un poids déterminé est à peser.

Selon un aspect de l'invention, le procédé de commande d'un dispositif de pesage par un terminal comprend une étape succédant à l'étape de réception de l'information de contrôle et consistant à l'élaboration et/ou l'acquisition d'une information de commande dite information de commande subséquente, puis une étape d'envoi à l'entité de commande de ladite information de commande subséquente selon le protocole de communication.

Il est ainsi possible suite à l'envoi d'une information de commande élémentaire de recevoir un retour en provenance du dispositif de pesage qui est l'information de contrôle élémentaire.

Ensuite le procédé permet en fonction de cette information de contrôle élémentaire d'élaborer et/ou d'acquérir une information de commande subséquente fonction de cette information de contrôle élémentaire.

Le procédé est donc adapté pour assister un utilisateur à la réalisation d'une recette de cuisine par l'assistance du terminal. Le terminal contrôle ainsi la réalisation de chaque phase de préparation de la recette de cuisine. L'économie d'énergie est alors réalisée sans que l'utilisateur ne soit gêné pour sa progression dans la préparation de la recette de cuisine.

La présente invention concerne également un produit programme d'ordinateur comprenant des instructions de code agencées pour mettre en œuvre les étapes d'un procédé de commande d'un dispositif de pesage par un terminal tel que décrit précédemment, lorsque ledit programme est exécuté sur une unité de traitement d'un terminal, notamment un terminal de communication portable.

La présente invention concerne en outre un terminal, notamment un terminal de communication portable, comprenant en mémoire les instructions de code d'un produit programme d'ordinateur tel que décrit ci-avant et agencé pour exécuter un tel produit programme d'ordinateur.

La présente invention concerne en outre un procédé de commande interne à un dispositif de pesage, le dispositif de pesage comprenant une source d'énergie interne, une entité de commande agencée pour recevoir des informations de commande selon un protocole de communication et au moins un élément fonctionnel apte à être commandé par l'entité de commande, le procédé de commande interne comprenant les étapes suivantes :
- réception d'une information de commande en provenance d'un terminal, l'information de commande comprenant au moins une instruction de rafraichissement ou d'actualisation relative à une période cyclique et/ou un rapport cyclique de rafraichissement ou d'actualisation d'une fonction de l'au moins un élément fonctionnel du dispositif de pesage,
- adaptation de la période cyclique et/ou du rapport cyclique de rafraichissement ou d'actualisation de ladite fonction de l'au moins un élément fonctionnel selon l'au moins une instruction de rafraichissement ou d'actualisation reçue.

Le dispositif de pesage est ainsi apte à adapter la sollicitation de ses éléments fonctionnels en fonction d'une information de commande selon le protocole de communication.

Le dispositif de pesage peut donc être utilisé tout en minimisant sa consommation énergétique en prévoyant de réduire la fréquence de mise en œuvre de fonctions non sollicitées ou ne devant pas être sollicitées selon le contexte.

Selon un aspect de l'invention, le procédé de commande interne à un dispositif de pesage comprend en outre une étape d'élaboration et d'envoi d'une information de contrôle à destination d'un terminal selon un protocole de communication, l'information de contrôle comprenant :
- une indication de charge relative à l'état de charge de la source d'énergie interne et/ou
- une indication de retour relative à un état d'un élément fonctionnel, telle qu'une valeur acquise par un capteur ou une commande utilisateur obtenue par une interface utilisateur, et/ou ladite indication de retour (re) étant relative à un mode de fonctionnement d'un ensemble d'éléments fonctionnels (F), un mode de fonctionnement correspondant à une définition donnée des états des éléments fonctionnels dudit ensemble.

Non seulement le dispositif de pesage est apte à réguler la sollicitation de ces éléments fonctionnels mais il peut envoyer des informations de contrôle rapportant l'état d'au moins un élément fonctionnel à un instant donné et de mesure provenant d'un capteur.

Il est donc aisé de communiquer avec un dispositif de pesage pour récupérer des mesures comme un poids mesuré ou alors la validation d'un utilisateur par un appui sur un bouton et également de lui envoyer des informations de commande pour minimiser sa consommation énergétique.

Selon un aspect de l'invention, l'information de commande comprend en outre une instruction de consigne relative à l'exécution d'une tâche par un élément fonctionnel.

Le dispositif de pesage est ainsi apte à être commandé depuis un terminal apte à communiquer selon le protocole de communication.

La présente invention concerne également un produit programme d'ordinateur comprenant des instructions de code agencées pour mettre en œuvre les étapes d'un procédé de commande interne à un dispositif de pesage tel que décrit précédemment, lorsque ledit programme est exécuté sur une entité de commande d'un dispositif de pesage.

La présente invention concerne en outre un dispositif de pesage comprenant une entité de commande ayant en mémoire les instructions de code d'un produit programme d'ordinateur tel que décrit ci-avant et agencé pour exécuter un tel produit programme d'ordinateur.

De toute façon l'invention sera bien comprise à l'aide de la description qui suit en référence aux dessins schématiques annexés représentant, à titre d'exemple non limitatif, une forme d'exécution de ce procédé de commande.
Figure 1 est une vue schématique d'un système de pesage comprenant un dispositif de pesage, un terminal et un serveur.
Figure 2 est un graphique représentant la période cyclique et le rapport cyclique d'une instruction de rafraichissement ou d'actualisation.
Figures 3 et 4 sont des schémas illustrant la communication entre le dispositif de pesage et le terminal.
Figure 5 est un ordinogramme présentant les étapes d'un procédé de commande d'un dispositif de pesage par un terminal.
Figure 6 est un ordinogramme présentant les étapes d'un procédé de commande interne à un dispositif de pesage.

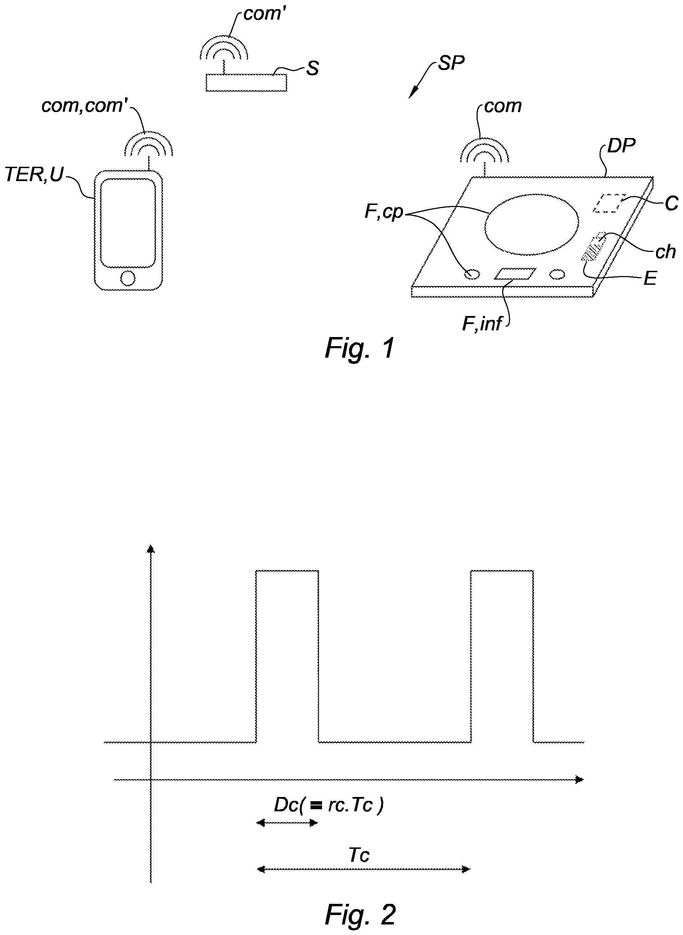

Comme illustré à la figure 1, un système de pesage SP comprend un dispositif de pesage DP, un terminal TER et un serveur S.

Le dispositif de pesage DP est agencé pour communiquer avec le terminal TER selon un protocole de communication com tel qu'un protocole sans fil de type faible énergie.

Le terminal TER et le serveur S sont quant à eux agencés pour communiquer selon un protocole de communication com' qui peut être identique ou différent du protocole de communication com.

Le terminal TER comprend une unité de traitement U agencée pour exécuter un procédé de commande du dispositif de pesage DP par le terminal TER. Pour ce faire, l'unité de traitement U comprend un produit programme d'ordinateur sous forme d'instructions de code de type application exécutable.

Le terminal TER est apte à envoyer une information de commande Cde à destination du dispositif de pesage DP selon le protocole de communication com.

Le terminal TER peut disposer de cette information de commande Cde en mémoire ou cette information de commande Cde peut lui avoir été communiquée par le serveur S. Egalement il est possible que le terminal TER ait acquis cette information de commande Cde suite à une saisie d'un utilisateur par l'intermédiaire d'une interface du terminal TER.

Le dispositif de pesage DP comprend une source d'énergie interne E, une entité de commande C et des éléments fonctionnels F. L'entité de commande C est agencée pour commander les éléments fonctionnels F et recevoir des informations sur l'état de chaque élément fonctionnel F.

Les éléments fonctionnels F sont de différents types : il peut s'agir d'un capteur cp, comme un capteur de poids, ou d'une interface utilisateur, telle qu'un bouton de commande. Il peut également s'agir d'un dispositif d'émission d'information inf tel qu'un afficheur ou une alarme.

L'entité de commande C est apte à recevoir les informations de commande Cde communiquées par le terminal TER. L'entité de commande C est également apte à élaborer des informations de contrôle ctr.

Chaque information de contrôle ctr comprend une indication de charge ch sur l'état de charge de la source d'énergie interne E et/ou une indication de retour re relative à un état d'un élément fonctionnel F, telle qu'une valeur acquise par un capteur ou une commande utilisateur obtenue par une interface utilisateur.

Comme illustré à la figure 2, chaque élément fonctionnel F est agencé pour être rafraichi - lorsqu'il s'agit d'un dispositif d'émission d'information inf - ou pour être actualisé - lorsqu'il s'agit d'un capteur cp - selon une période cyclique Tc et un rapport cyclique rc de rafraichissement ou d'actualisation.

Il apparait ainsi qu'en définissant une durée de fonctionnement cyclique Dc par rapport à la période cyclique Tc, on définit la valeur du rapport cyclique rc. L'axe des abscisses correspond donc au temps et l'axe des ordonnées à la sollicitation d'un élément fonctionnel en position haute et à l'absence de sollicitation en position basse.

Chaque élément fonctionnel F est contrôlé indépendamment par l'entité de commande C selon sa période cyclique Tc et son rapport cyclique rc. Les éléments fonctionnels F ne fonctionnent donc pas en permanence.

Pour ce faire l'entité de commande C comprend en mémoire des instructions de code d'un produit programme d'ordinateur pour l'exécution d'un procédé de commande interne à l'entité de commande.

Il est également à remarquer que lors de l'absence de sollicitation d'un élément fonctionnel F, l'entité de commande C peut générer une commande autonome du dispositif de pesage DP afin de permettre aux éléments fonctionnels F concernés, d'abaisser progressivement la consommation d'énergie selon le temps d'absence de sollicitation.

L'entité de commande C peut élaborer des informations de contrôle ctr pour informer de l'état des éléments fonctionnels F.

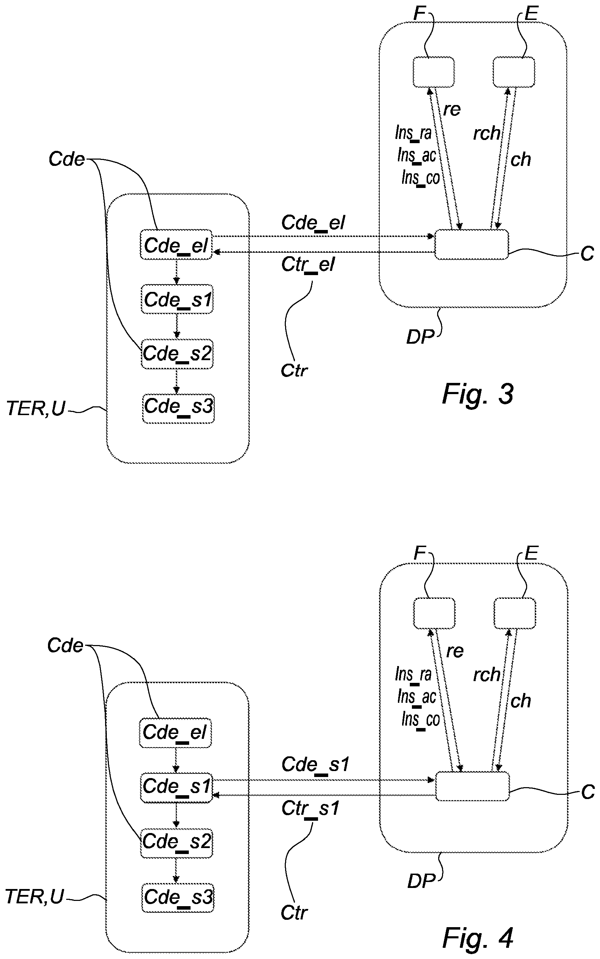

Comme illustré aux figures 3 et 4, le terminal TER et le dispositif de pesage DP sont agencés pour échanger des informations de commande Cde et des informations de contrôle ctr.

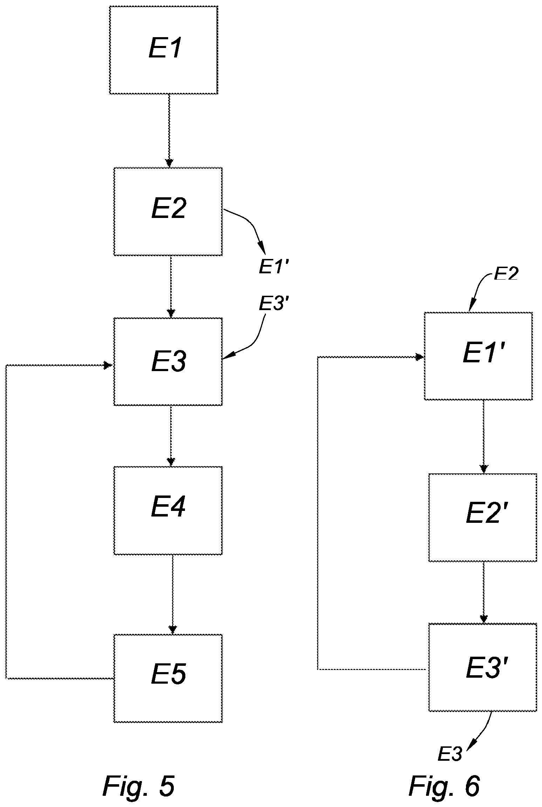

Le terminal TER est agencé pour exécuter les étapes d'un procédé de commande du dispositif de pesage DP illustrées à la figure 5 et le dispositif de pesage DP est agencé pour exécuter les étapes d'un procédé de commande interne illustrées à la figure 6.

Ces deux procédés définissent les interractions entre le terminal TER et le dispositif de pesage DP qui permettent de guider un utilisateur lors de la réalisation d'une recette de cuisine tout en limitant la sollicitation des éléments fonctionnels, faisant ainsi diminuer la consommation énergétique de la source d'énergie interne E.

Le procédé de commande du dispositif de pesage DP par le terminal TER comprend une étape E1 d'élaboration et/ou d'acquisition par le terminal TER d'une information de commande Cde comprenant :
- au moins une instruction de consigne Ins_co relative à l'exécution d'une tâche par un élément fonctionnel F, l'instruction de consigne Ins_co peut être une instruction commandant la réalisation d'une mesure de poids dans une unité donnée avec une valeur cible ou une consigne d'affichage d'une information sur l'afficheur, d'une remise à zéro du poids (tare) ou encore d'un changement d'unité,
- au moins une instruction de rafraichissement Ins_ra ou d'actualisation Ins_ac relative à une période cyclique Tc et/ou un rapport cyclique rc de rafraichissement ou d'actualisation d'une fonction d'un ou plusieurs éléments fonctionnels F.

Optionnellement l'information de commande peut comprendre une requête de charge rch qui a pour but d'interroger le dispositif de pesage sur l'état charge de la source d'énergie interne E.

Le procédé de commande du dispositif de pesage DP par le terminal TER comprend ensuite une étape E2 d'envoi au dispositif de pesage DP de ladite information de commande Cde.

La réception par le dispositif de pesage DP de cette information de commande Cde correspond à l'étape E1' du procédé de commande interne au dispositif de pesage DP.

Le procédé de commande interne au dispositif de pesage DP comprend ensuite une étape E2' adaptation de la période cyclique Tc et/ou du rapport cyclique rc de rafraichissement ou d'actualisation de ladite fonction de l'élément fonctionnel F selon l'au moins une instruction de rafraichissement Ins_ra ou d'actualisation Ins_ac reçue.

Parallèlement à cette étape E2', l'instruction de consigne Ins_co est prise en compte par l'entité de commande C qui réalise la tâche demandée.

Ensuite ou indépendamment selon les cas, une étape E3' du procédé de commande interne au dispositif de pesage DP consiste à l'élaboration et à l'envoi d'une information de contrôle ctr à destination du terminal TER.

Cette information de contrôle ctr est un retour d'information envoyé au terminal TER et comprend en ce sens au moins une indication de retour re relative à un état d'un élément fonctionnel F. Il peut s'agir d'une valeur acquise par un capteur ou une commande utilisateur en provenance de l'interface utilisateur.

Cette information de contrôle ctr peut également comprendre au moins une indication de retour re relative à un mode de fonctionnement d'un ensemble d'éléments fonctionnels F.

Un mode de fonctionnement correspond à une définition donnée des états des éléments fonctionnels F dudit ensemble d'éléments fonctionnels F.

Un mode de fonctionnement correspond ainsi à une configuration d'états reflétant un fonctionnement général du dispositif de pesage DP. Cette configuration peut être préétablie.

Selon un exemple, un mode de fonctionnement peut être qualifié de « mode de fonctionnement à pleine puissance ». Dans ce cas, la définition des états des éléments fonctionnels F est telle que chaque élément fonctionnel est sollicité au maximum de ses possibilités. La consommation énergétique n'est pas une priorité pour ce mode de fonctionnement.

Selon un autre exemple, un mode de fonctionnement peut être qualifié de « mode de fonctionnement en économie de batterie ». Dans ce cas, les éléments fonctionnels sont moins sollicités et la consommation énergétique réduite.

D'autres modes de fonctionnement peuvent également être prévus, par exemple pour privilégier le fonctionnement de certains éléments fonctionnels par rapport à d'autres, par exemple moins susceptibles d'être utilisés dans un contexte donné.

L'information de contrôle ctr peut également comprendre une indication de charge ch relative à l'état de charge de la source d'énergie interne E. Cette indication de charge peut être émise de l'initiative du dispositif de pesage DP ou suite à la réception d'une requête de charge rch en provenance du terminal TER.

Suite à l'envoi de l'information de contrôle ctr, soit suite à l'étape E3', le procédé de commande du dispositif de pesage DP par le terminal TER se poursuit avec l'étape E3 de réception de l'information de contrôle ctr.

Une étape E4 succédant à l'étape E3 consiste à l'élaboration et/ou l'acquisition d'une information de commande Cde dite information de commande subséquente Cde_s1 à Cde_s3.

Cette étape est similaire à l'étape E1 à la différence près que l'information de commande subséquente prend en compte l'information de contrôle reçue lors de l'étape E3.

Comme illustré aux figures 3 et 4, une suite d'informations de commande Cde peut être présente dans la mémoire de l'unité de traitement U. Chaque information de commande peut correspondre à une étape d'une recette de cuisine, ce qui a été représenté par des cases reliées par des flèches pour symboliser l'ordre des étapes.

La première information de commande Cde correspond à une information de commande dite élémentaire Cde_el. Cette information de commande élémentaire Cde_el est envoyée par le terminal TER lors de l'étape E2. Elle permet de débuter la réalisation de la recette sans qu'aucune information de contrôle soit au préalable reçue.

Le dispositif de pesage DP procède ensuite au traitement de cette information de commande élémentaire Cde_el avec les étapes E1' à E3'. Si l'information de commande élémentaire Cde correspond à une étape de pesage, par exemple de 100 g de farine, cela signifie que l'information de commande élémentaire Cde_el comprenait par exemple :
- une instruction de consigne Ins_co demandant la réalisation de la tare du capteur de poids, le passage de l'unité utilisée au gramme et une valeur cible réglée sur 100 g,
- une instruction de rafraichissement Ins_ra définissant la période cyclique Tc et le rapport cyclique rc de rafraichissement de l'affichage du poids ; dans ce cas la période cyclique Tc et le rapport cyclique rc sont définis de manière telle que l'utilisateur puisse aisément constater l'augmentation du poids au fur et à mesure qu'il ajoute de la farine,
- une instruction d'actualisation Ins_ac définissant la période cyclique Tc et le rapport cyclique rc d'actualisation de l'acquisition d'un signal en provenance du capteur de poids de manière à ce que la mesure paraisse instantanée à l'utilisateur,
- une instruction d'actualisation Ins_ac définissant la période cyclique Tc et le rapport cyclique rc d'actualisation de l'acquisition d'un signal provenant du bouton de commande de manière à procéder à des acquisitions à des périodes de temps espacées puisque l'utilisateur n'a pas à solliciter cet élément fonctionnel à ce moment de la recette.

Une fois la valeur cible atteinte, l'entité de commande C élabore puis envoie lors de l'étape E3' une information de contrôle précisant que la valeur cible a été atteinte. A la figure 3 cette information de contrôle a été appelée information de contrôle élémentaire ctr_el car elle correspond à l'information de commande élémentaire Cde_el.

Le terminal TER réceptionne cette information de contrôle élémentaire ctr_el et en conclut que l'étape de la recette correspondante a bien été réalisée : les 100 g de farine ont bien été pesés.

Comme illustré à la figure 4, le terminal TER procède à l'étape E4 et dispose d'une première information de commande subséquente Cde_s1. Cette information de commande est qualifiée de subséquente dans le sens où elle n'est considérée que lorsque l'étape précédente a bien été réalisée et validée par la réception de l'information de contrôle élémentaire ctr_el.

En ce sens, une information de commande subséquente différente peut être envoyée lorsque l'information de contrôle ctr n'est pas celle escomptée.

Dans une étape E5, le terminal procède à l"envoi à l'entité de commande C de ladite première information de commande subséquente Cde_s1.

En réaction, le dispositif de pesage DP procède à nouveau à l'exécution des étapes E1' à E3' en réalisant la ou les tâches qui lui sont demandées par la ou les instructions de consignes Ins_co et en adaptant la ou les périodes cycliques Tc et/ou rapports cycliques rc des éléments fonctionnels.

Ce principe d'échange d'informations de commande Cde et d'informations de contrôle ctr se poursuit jusqu'à ce que chaque étape de la recette ait été exécutée.

Les instructions de consigne Ins_co peuvent être de plusieurs types : il peut s'agir de la réalisation d'une pesée comme évoquée plus haut, il peut également s'agir d'une tare, d'un changement d'unité ou d'une étape de temporisation correspondant par exemple à un temps de repos pour une pâte ou à l'attente de la validation manuelle d'un utilisateur au niveau du bouton de commande suivant la réalisation manuelle d'une tâche comme un mélange d'ingrédients précédemment pesés.

Une partie des informations de commande peut également comprendre une requête de charge rch pour faire remonter au terminal TER l'état de la charge ch de la source d'énergie interne E. Eventuellement l'information de commande subséquente ait alors adaptée en modifiant les instructions d'actualisation Ins_ac ou de rafraichissement Ins_ra.

Il apparait donc qu'à tout moment, chaque élément fonctionnel F est configuré en termes de période cyclique Tc et/ou de rapport cyclique rc de rafraichissement ou d'actualisation selon ses besoins d'utilisation.

Cette disposition va dans le sens des économies d'énergie pour la source d'énergie interne E tout en maintenant un fonctionnement optimal du point de vue de l'utilisateur lors de l'exécution de la recette. En effet, celui-ci ne se rend pas compte que certaines fonctions sont actualisées ou rafraichies moins souvent car il n'est pas censé les utiliser.

Il est donc possible de contrôler à distance un dispositif de pesage DP par un terminal TER pour l'exécution d'une tâche mais également de configurer les éléments fonctionnels F de manière telle qu'à chaque instant la consommation d'énergie soit minimale.

Il est ainsi possible de proposer une solution d'assistance culinaire évoluée associant un terminal de communication mobile et une balance tout en garantissant une expérience d'usage conviviale et fluide pour l'utilisateur ainsi qu'une autonomie de fonctionnement de plusieurs années.

Comme il va de soi, l'invention ne se limite pas à la seule forme d'exécution de ce procédé de commande, décrit ci-dessus à titre d'exemple, elle en embrasse au contraire toutes les variantes de réalisation.

## Revendications

1. Procédé de commande d'un dispositif de pesage (DP) par un terminal (TER), le dispositif de pesage (DP) comprenant une source d'énergie interne (E), une entité de commande (C) agencée pour recevoir des informations de commande (Cde) selon un protocole de communication et au moins un élément fonctionnel (F) apte à être commandé par l'entité de commande (C), le procédé de commande comprenant les étapes suivantes :
- (E1) élaboration par le terminal (TER) et/ou acquisition d'une information de commande (Cde) comprenant au moins une instruction de rafraichissement (Ins_ra) ou d'actualisation (Ins_ac) relative à une période cyclique (Tc) et/ou un rapport cyclique (rc) de rafraichissement ou d'actualisation d'une fonction de l'au moins un élément fonctionnel (F) du dispositif de pesage (DP),
- (E2) envoi à l'entité de commande (C) de ladite information de commande (Cde) selon le protocole de communication (com).

2. Procédé de commande d'un dispositif de pesage (DP) par un terminal (TER) selon la revendication 1, selon lequel l'instruction de rafraichissement (Ins_ra) ou d'actualisation (Ins_ac) correspond respectivement à :
- la période cyclique (Tc) et/ou au rapport cyclique (rc) de rafraichissement d'un dispositif d'émission d'information (inf) tel que l'affichage d'un afficheur ou une émission sonore d'une alarme, ou,
- la période cyclique (Tc) et/ou au rapport cyclique (rc) d'actualisation d'acquisition d'un capteur (cp), tel qu'un capteur de poids, ou d'une interface utilisateur, telle qu'un bouton de commande.

3. Procédé de commande d'un dispositif de pesage (DP) par un terminal (TER) selon l'une des revendications précédentes, dans lequel ladite information de commande (Cde) comprend en outre une instruction de consigne (Ins_co) relative à l'exécution d'une tâche par un élément fonctionnel (F).

4. Procédé de commande d'un dispositif de pesage (DP) par un terminal (TER) selon l'une des revendications précédentes, comprenant en outre une étape (E3) de réception d'une information de contrôle (ctr) en provenance du dispositif de pesage (DP), l'information de contrôle (ctr) comprenant :
- une indication de charge (ch) relative à l'état de charge de la source d'énergie interne (E) et/ou
- une indication de retour (re) relative à un état d'un élément fonctionnel (F), telle qu'une valeur acquise par un capteur ou une commande utilisateur obtenue par une interface utilisateur, et/ou ladite indication de retour (re) étant relative à un mode de fonctionnement d'un ensemble d'éléments fonctionnels (F), un mode de fonctionnement correspondant à une définition donnée des états des éléments fonctionnels dudit ensemble.

5. Procédé de commande d'un dispositif de pesage (DP) par un terminal (TER) selon la revendication précédente, comprenant une étape (E4) succédant à l'étape (E3) de réception de l'information de contrôle (ctr) et consistant à l'élaboration et/ou l'acquisition d'une information de commande (Cde) dite information de commande subséquente (Cde_s1 à Cde_s3), puis une étape (E5) d'envoi à l'entité de commande (C) de ladite information de commande subséquente (Cde_s1 à Cde_s3) selon le protocole de communication (com).

6. Produit programme d'ordinateur comprenant des instructions de code agencées pour mettre en œuvre les étapes d'un procédé selon l'une des revendications 1 à 5, lorsque ledit programme est exécuté sur une unité de traitement (U) d'un terminal (TER), notamment un terminal (TER) de communication portable.

7. Procédé de commande interne à un dispositif de pesage (DP), le dispositif de pesage (DP) comprenant une source d'énergie interne (E), une entité de commande (C) agencée pour recevoir des informations de commande (Cde) selon un protocole de communication et au moins un élément fonctionnel (F) apte à être commandé par l'entité de commande (C), le procédé de commande interne comprenant les étapes suivantes :
- (E1') réception d'une information de commande (Cde) en provenance d'un terminal (TER), l'information de commande (Cde) comprenant au moins une instruction de rafraichissement (Ins_ra) ou une instruction d'actualisation (Ins_ac) relative à une période cyclique (Tc) et/ou un rapport cyclique (rc) de rafraichissement ou d'actualisation d'une fonction de l'au moins un élément fonctionnel (F) du dispositif de pesage (DP),
- (E2') adaptation de la période cyclique (Tc) et/ou du rapport cyclique (rc) de rafraichissement ou d'actualisation de ladite fonction de l'au moins un élément fonctionnel (F) selon l'au moins une instruction de rafraichissement (Ins_ra) ou d'actualisation (Ins_ac) reçue.

8. Procédé de commande interne à un dispositif de pesage (DP) selon la revendication précédente comprenant en outre une étape (E3') d'élaboration et d'envoi d'une information de contrôle (ctr) à destination d'un terminal (TER) selon un protocole de communication (com), l'information de contrôle (ctr) comprenant :
- une indication de charge (ch) relative à l'état de charge de la source d'énergie interne (E) et/ou
- une indication de retour (re) relative à un état d'un élément fonctionnel (F), telle qu'une valeur acquise par un capteur ou une commande utilisateur obtenue par une interface utilisateur, et/ou ladite indication de retour (re) étant relative à un mode de fonctionnement d'un ensemble d'éléments fonctionnels (F), un mode de fonctionnement correspondant à une définition donnée des états des éléments fonctionnels dudit ensemble.

9. Procédé de commande interne à un dispositif de pesage (DP) selon l'une des revendications 7 ou 8, dans lequel l'information de commande (Cde) comprend en outre une instruction de consigne (Ins_co) relative à l'exécution d'une tâche par un élément fonctionnel (F).

10. Produit programme d'ordinateur comprenant des instructions de code agencées pour mettre en œuvre les étapes d'un procédé selon l'une des revendications 7 à 9, lorsque ledit programme est exécuté sur une entité de commande (C) d'un dispositif de pesage (DP).

11. Dispositif de pesage (DP) comprenant une entité de commande (C) ayant en mémoire les instructions de code d'un produit programme d'ordinateur selon la revendication précédente et agencé pour exécuter un tel produit programme d'ordinateur.

## Patentansprüche

1. Verfahren zum Steuern einer Wiegevorrichtung (DP) durch ein Endgerät (TER), wobei die Wiegevorrichtung (DP) eine interne Energiequelle (E), eine Steuereinheit (C), die zum Empfangen von Steuerinformationen (Cde) gemäß einem Kommunikationsprotokoll und mindestens ein von der Steuereinheit (C) steuerbares Funktionselement (F) umfasst, wobei das Steuerverfahren die folgenden Schritte umfasst:
- (E1) Erstellen durch das Endgerät (TER) und/oder Erfassen von Steuerinformationen (Cde), die mindestens eine Auffrischungs- (Ins_ra) oder Aktualisierungsanweisung (Ins_ac) umfasst, die sich auf eine zyklische Periode (Tc) und/oder ein zyklisches Verhältnis (rc) der Auffrischung oder Aktualisierung einer Funktion des mindestens einen Funktionselements (F) der Wiegevorrichtung (DP) bezieht,
- (E2) Senden der Steuerinformation (Cde) gemäß dem Kommunikationsprotokoll (com) an die Steuereinheit (C).

2. Verfahren zum Steuern einer Wiegevorrichtung (DP) durch ein Endgerät (TER) nach Anspruch 1, wobei die Auffrischungs- (Ins_ra) oder Aktualisierungsanweisung (Ins_ac) jeweils entspricht:
- der zyklischen Periode (Tc) und / oder dem zyklischen Verhältnis (rc) der Auffrischung einer Informationssendevorrichtung (inf), wie beispielsweise die Anzeige eines Anzeigegeräts oder eine Tonaussendung eines Alarms, oder
- der zyklischen Periode (Tc) und/oder dem zyklischen Verhältnis (rc) der Aktualisierung der Erfassung eines Sensors (cp), wie eines Gewichtssensors, oder einer Benutzerschnittstelle, wie einer Steuertaste.

3. Verfahren zum Steuern einer Wiegevorrichtung (DP) durch ein Endgerät (TER) nach einem der vorhergehenden Ansprüche, wobei die Steuerinformation (Cde) ferner eine Sollwertanweisung (Ins_co) umfasst, die sich auf die Ausführung einer Aufgabe durch ein Funktionselement (F) bezieht.

4. Verfahren zum Steuern einer Wiegevorrichtung (DP) durch ein Endgerät (TER) nach einem der vorhergehenden Ansprüche, ferner umfassend einen Schritt (E3) zum Empfangen einer Steuerinformation (ctr) von der Wiegevorrichtung (DP), wobei die Steuerinformation (ctr) umfasst:
- eine Ladeanzeige (ch) in Bezug auf den Ladezustand der internen Energiequelle (E) und / oder
- eine Rückmeldungsanzeige (re) in Bezug auf einen Zustand eines Funktionselements (F), wie beispielsweise einen von einem Sensor erfassten Wert oder einen von einer Benutzerschnittstelle erhaltenen Benutzerbefehl, und/oder wobei die Rückmeldungsanzeige (re) sich auf einen Betriebsmodus einer Anordnung von Funktionselementen (F) bezieht, wobei ein Betriebsmodus einer gegebenen Definition der Zustände der Funktionselemente der Anordnung entspricht.

5. Verfahren zum Steuern einer Wiegevorrichtung (DP) durch ein Endgerät (TER) nach dem vorhergehenden Anspruch, umfassend einen Schritt (E4), der auf den Schritt (E3) des Empfangens der Steuerinformation (ctr) folgt und aus dem Erstellen und / oder Erfassen einer Steuerinformation (Cde), die nachfolgende Steuerinformation (Cde_s1 bis Cde_s3) genannt wird, besteht, dann einen Schritt (E5) des Sendens von der nachfolgenden Steuerinformation (Cde_s1 bis Cde_s3) an die Steuereinheit (C) gemäß dem Kommunikationsprotokoll (com).

6. Computerprogrammprodukt, umfassend Codeanweisungen zum Implementieren der Schritte eines Verfahrens nach einem der Ansprüche 1 bis 5, wenn das Programm auf einer Verarbeitungseinheit (U) eines Endgeräts (TER), insbesondere einem Endgerät (TER) für die tragbare Kommunikation, ausgeführt wird.

7. Steuerverfahren innerhalb einer Wiegevorrichtung (DP), wobei die Wiegevorrichtung (DP) eine interne Energiequelle (E), eine Steuereinheit (C), die eingerichtet ist, Steuerinformationen (Cde) gemäß einem Kommunikationsprotokoll zu empfangen, und mindestens ein von der Steuereinheit (C) steuerbares Funktionselement (F) umfasst, wobei das interne Steuerverfahren die folgenden Schritte umfasst:
- (E1') Empfang von Steuerinformation (Cde) von einem Endgerät (TER), wobei die Steuerinformation (Cde) mindestens eine Auffrischungsanweisung (Ins_ra) oder eine Aktualisierungsanweisung (Ins_ac) in Bezug auf eine zyklische Periode (Tc) und/oder ein zyklisches Verhältnis (rc) der Auffrischung oder Aktualisierung einer Funktion des mindestens einen Funktionselements (F) der Wiegevorrichtung (DP) umfasst,
- (E2') Anpassung der zyklischen Periode (Tc) und / oder des zyklischen Verhältnisses (rc) der Auffrischung- oder Aktualisierung der Funktion des mindestens einen Funktionselements (F) gemäß der mindestens einen empfangenen Auffrischungs-(Ins_ra) oder Aktualisierungsanweisung (Ins_ac).

8. Steuerverfahren innerhalb einer Wiegevorrichtung (DP) nach dem vorhergehenden Anspruch, ferner umfassend einen Schritt (E3') zum Erstellen und Senden von einer Steuerinformation (ctr) an ein Endgerät (TER) gemäß einem Kommunikationsprotokoll (com), wobei die Steuerinformation (ctr) umfasst:
- eine Ladeanzeige (ch) in Bezug auf den Ladezustand der internen Energiequelle (E) und / oder
- eine Rückmeldungsanzeige (re) in Bezug auf einen Zustand eines Funktionselements (F), wie beispielsweise eines von einem Sensor erfassten Werts oder eines von einer Benutzerschnittstelle erhaltenen Benutzerbefehls, und/oder wobei die Rückmeldungsanzeige (re) sich auf einen Betriebsmodus einer Anordnung von Funktionselementen (F) bezieht, wobei ein Betriebsmodus einer gegebenen Definition der Zustände der Funktionselemente der Anordnung entspricht.

9. Steuerverfahren innerhalb einer Wiegevorrichtung (DP) nach einem der Ansprüche 7 oder 8, wobei die Steuerinformation (Cde) ferner eine Sollwertanweisung (Ins_co) umfasst, die sich auf die Ausführung einer Aufgabe durch ein Funktionselement (F) bezieht.

10. Computerprogrammprodukt, umfassend Codeanweisungen, die eingerichtet sind, die Schritte eines Verfahrens nach einem der Ansprüche 7 bis 9 auszuführen, wenn das Programm auf einer Steuereinheit (C) einer Wiegevorrichtung (DP) ausgeführt wird.

11. Wiegevorrichtung (DP), umfassend eine Steuereinheit (C), die die Codeanweisungen eines Computerprogrammprodukts nach dem vorhergehenden Anspruch im Speicher hat und eingerichtet ist, um ein solches Computerprogrammprodukt auszuführen.

## Claims

1. Method for controlling a weighing device (DP) by a terminal (TER), the weighing device (DP) comprising an internal energy source (E), a control entity (C) arranged to receive control pieces of information (Cde) according to a communication protocol and at least one functional element (F) capable of being controlled by the control entity (C), the control method comprising the following steps:
- (E1) developing by the terminal (TER) and/or acquiring a control piece of information (Cde) comprising at least one refresh instruction (Ins_ra) or update instruction (Ins_ac) related to a cycle period (Tc) and/or a duty cycle (rc) of refreshing or updating a function of the at least one functional element (F) of the weighing device (DP),
- (E2) sending said control piece of information (Cde) to the control entity (C) according to the communication protocol (com).

2. Method for controlling a weighing device (DP) by a terminal (TER) according to claim 1, according to which the refresh instruction (Ins_ra) or update instruction (Ins_ac) corresponds respectively to:
- the cycle period (Tc) and/or the duty cycle (rc) of refreshing a piece of information transmission device (inf) such as the display of a display device or a sound emission of an alarm or,
- the cycle period (Tc) and/or the duty cycle (rc) of updating the acquisition of a sensor (cp), such as a weight sensor, or a user interface, such as a control button.

3. Method for controlling a weighing device (DP) by a terminal (TER) according to one of the preceding claims, wherein said control piece of information (Cde) further comprises a setpoint instruction (Ins_co) related to the execution of a task by a functional element (F).

4. Method for controlling a weighing device (DP) by a terminal (TER) according to one of the preceding claims, further comprising a step (E3) of receiving a monitoring piece of information (ctr) coming from the weighing device (DP), the monitoring piece of information (ctr) comprising:
- a charge indication (ch) related to the state of charge of the internal energy source (E) and/or
- a return indication (re) related to a state of a functional element (F), such as a value acquired by a sensor or a user control obtained via a user interface, and/or said return indication (re) related to an operating mode of a set of functional elements (F), an operating mode corresponding to a given definition of the states of the functional elements of said set.

5. Method for controlling a weighing device (DP) by a terminal (TER) according to the preceding claim, comprising a step (E4) following the step (E3) of receiving the monitoring piece of information (ctr) and consisting in developing and/or acquiring a control piece of information (Cde) called subsequent control piece of information (Cde_s1 to Cde_s3), then a step (E5) of sending said subsequent control piece of information (Cde_s1 to Cde_s3) to the control entity (C) according to the communication protocol (com).

6. Computer program product comprising code instructions arranged to implement the steps of a method according to one of claims 1 to 5, when said program is executed on a processing unit (U) of a terminal (TER), in particular a portable communication terminal (TER).

7. Control method internal to a weighing device (DP), the weighing device (DP) comprising an internal energy source (E), a control entity (C) arranged to receive control pieces of information (Cde) according to a communication protocol and at least one functional element (F) capable of being controlled by the control entity (C), the internal control method comprising the following steps:
- (E1') receiving a control piece of information (Cde) coming from a terminal (TER), the control piece of information (Cde) comprising at least one refresh instruction (Ins_ra) or an update instruction (Ins_ac) related to a cycle period (Tc) and/or a duty cycle (rc) of refreshing or updating a function of the at least one functional element (F) of the weighing device (DP),
- (E2') adapting the cycle period (Tc) and/or the duty cycle (rc) of refreshing or updating said function of the at least one functional element (F) according to at least one received refresh instruction (Ins_ra) or update instruction (Ins_ac).

8. Control method internal to a weighing device (DP) according to the preceding claim further comprising a step (E3') of developing and sending a monitoring piece of information (ctr) to a terminal (TER) according to a communication protocol (com), the monitoring piece of information (ctr) comprising:
- a charge indication (ch) related to the state of charge of the internal energy source (E) and/or
- a return indication (re) related to a state of a functional element (F), such as a value acquired by a sensor or a user control obtained via a user interface, and/or said return indication (re) related to an operating mode of a set of functional elements (F), an operating mode corresponding to a given definition of the states of the functional elements of said set.

9. Control method internal to a weighing device (DP) according to one of claims 7 or 8, wherein the control piece of information (Cde) further comprises a setpoint instruction (Ins_co) related to the execution of a task by a functional element (F).

10. Computer program product comprising code instructions arranged to implement the steps of a method according to one of claims 7 to 9, when said program is executed on a control entity (C) of a weighing device (DP).

11. Weighing device (DP) comprising a control entity (C) having in memory the code instructions of a computer program product according to the preceding claim and arranged to execute such a computer program product.
